Europäisches Patentamt

**European Patent Office**

**Office européen des brevets**

(19)

(11) Publication number: **0 146 056**
A2

# (12) EUROPEAN PATENT APPLICATION

(21) Application number: **84114578.2**

(22) Date of filing: **30.11.84**

(51) Int. Cl.⁴: **G 06 K 19/08**

(30) Priority: **02.12.83 DK 5557/83**

(43) Date of publication of application: **26.06.85**
**Bulletin 85/26**

(84) Designated Contracting States: **BE CH DE FR GB LI NL SE**

(71) Applicant: **GNT AUTOMATIC A/S, Telefonvej 6, DK-2860 Soeborg (DK)**

(72) Inventor: **Rasmussen, Jorgen, Frederiksvej 10, 2. tv, DK-2000 Frederiksberg (DK)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) **A magnetic recording member and a method of preparing a magnetic recording member.**

(57) A magnetic recording member (10) comprises a first part or a first layer (11) of a first magnetic material and a second part or a second layer (12) of a second magnetic material. The materials of the first and second layers have substantially identical magnetic properties as to their intrinsic coercivity, which is preferably of the order of 100–1.000 Oe, more preferably approximately 300 Oe. The first layer (11) includes pre-recorded information and the second layer (12) constitutes a part for recording additional information. Due to the mutual arrangement of the first and second layers, it is impossible to record information in the second layer without re-recording information in the first layer. Thus, any attempt to erase or otherwise alter the "legal" additional information of the second layer is easily detectable, i.e. the magnetic recording member (10) is rendered tamper-proof. The magnetic recording member (10) preferably constitutes a magnetic strip of a magnetic card further comprising a support layer, such as a polyvinyl chloride layer onto which the magnetic recording member is glued by means of a glue layer (13).

A MAGNETIC RECORDING MEMBER AND A METHOD OF PREPARING A MAGNETIC RECORDING MEMBER

---

The present invention relates to the field of magnetic recording. More particularly, the present invention relates to a magnetic recording member, such as a magnetic recording disc, a magnetic recording tape, a magnetic recording cassette, a magnetic recording card, and devices such as cards, e.g. credit or debit cards, comprising a magnetic recording strip.

The technique of recording information on a magnetic recording member has been highly refined throughout the last decade. Thus, new fields of recording information has been developed, new recording materials have been introduced, and new recording concepts have appeared. Particularly within the field of recording numeric information, i.e. within the computer and business machine field, this development has been particularly intense, as the conventional communication and transactions through papers of different kind, e.g. through letters, notes, and bills are to be substituted by electronic transactions controlled by magnetic recording members.

In many different situations, a magnetic recording member, such as a debit card, is employed for carrying out a particular action such as the payment of a particular amount of money, the transfer of money, etc. The magnetic recording member in question includes information allowing the transaction, e.g. information identifying the account in question and the balance thereof, and is further adapted to have new information recorded as to changes of the account balance, etc. As will be appreciated, a criminal might wish to erase or otherwise alter or tamper with the latest recorded information in order to render it possible to make the magnetic recording member permit one and the same action several times.

Therefore, there is a need for providing a magnetic recording member including pre-recorded information and further being adapted to have

P&V F4458jA, 1984 11 26, HSN/IPb/KHkb

additional information recorded in the magnetic recording member in which any tampering with the additional information recorded in the magnetic recording member is very easily detected.

Furthermore, there is a need for modifying conventional magnetic recording members so as to provide magnetic recording members of conventional concept, such as magnetic discs, magnetic tapes, magnetic cassettes, magnetic cards, etc., in which a tamper-proof recording of additional information is rendered possible as any tampering with the additional information is very easily detected.

These and other objects appearing from the disclosure below are obtained by a magnetic recording member according to the invention comprising a first part of a first magnetic material and a second part of a second magnetic material, said first and second materials having substantially identical magnetic properties, said first part including pre-recorded information and said second part constituting a part for recording additional information, and said first and second parts being arranged in relation to each other so as to eliminate the possibility of recording information in said second part without re-recording information in said first part.

By arranging said first and second parts relative to each other so that the recording of information in said second part, i.e. the recording of additional information in the magnetic recording member, inherently provides re-recording of information in said first part, any attempt to erase or otherwise alter the information recorded in said second part is very easily detectable. By this, a fraud- and tamper-proof recording of the additional information in said second part of the magnetic recording member is obtained.

In accordance with the present invention, the first and second parts may be arranged relative to each other in any appropriate manner providing the fraud- and tamper-proof recording of information in said second part; however, in accordance with a first embodiment of the magnetic recording member of the present invention, said first part defines a dot pattern, and said second part constitutes a filling-out of said dot pattern.

P&V F4458jA, 1984 11 26, HSN/IPb/KHkb

In accordance with an alternative and presently preferred embodiment of the magnetic recording member according to the invention, said first and second parts constitute a first layer and a second layer, respectively, arranged on top of each other.

Although the concept of the present invention may be employed for analogue recording purposes, it is, however, primarily intended for digital recording use. The first and second materials may, consequently, comprise substantially uniform, elongated magnetic particles, and the magnetic particles of the first and second parts may define substantially identical directions of magnetic orientation in said first and second parts.

In order to fulfill the requirement as to the substantial identity of the magnetic properties of said first and second materials, the first magnetic material may advantageously be identical to the second material.

Although the properties, i.e. the coercivity and the remanence of materials of the first and second parts of the magnetic recording member may vary within large limits and be adapted to particular requirements, the first and second materials may advantageously have substantially identical intrinsic coercivity of the order of 100-10,000 Oe, preferably 100-1,000 Oe, more preferably 300 Oe. Furthermore, the materials may have substantially identical remanence of the order of 1-10 Maxwells (10-100 nWb), preferably approximately 5 Maxwells (50 nWb).

The first and second parts of the magnetic recording member may be self-supporting or integrally comprise a supporting material or supporting materials, such as plastics materials, or alternatively be embedded within the supporting material or supporting materials, such as a plastics material. Alternatively, the magnetic recording member may be arranged on a support layer, such as a conventional plastics sheet employed for conventional magnetic tapes or conventional magnetic cards, etc. In the above described embodiment including a first layer and a second layer, the layers may be arranged in any configu-

P&V F4458jA, 1984 11 26, HSN/IPb/KHkb

ration in relation to the support layer. However, in the presently preferred embodiment of the invention, the first layer is arranged on top of the support layer, and the second layer is arranged on top of the first layer, since this preferred embodiment is very easily produced by applying the first layer on top of the support layer, by recording the pre-recorded information in the first layer and by applying the second layer on top of the first layer including the pre-recorded information.

In a particular embodiment of the magnetic recording member in which the member is arranged on a support layer, the support layer and the magnetic recording member may together constitute a magnetic card, and the first and second layers may together define a magnetic strip extending across the support layer. The magnetic card may be of any type, however, preferably of the type described in International Standard (ISO standard) 2894, published by the International Organization for Standardisation, or of a type slightly differing from the ISO card, such as a card of a smaller thickness, however, preferably still of a type which is compatible with the ISO card.

The present invention further relates to a method of preparing a magnetic recording member of the above described type, i.e. comprising a first part of a first magnetic material and a second part of a second magnetic material, said first and second materials having substantially identical magnetic properties. The method according to the present invention comprises the following steps:

a) providing said first part,
b) recording information in said first part, and
c) providing said second part arranged relative to said first part so as to eliminate the possibility of recording information in said second part without re-recording information in said first part.

The method according to the invention may be adapted to provide a magnetic recording member having any of the above characteristics. Thus, in accordance with a first embodiment of the method according to the invention, the first part is arranged in a dot pattern and the second part is arranged filling-out the dot pattern. In an alternative and presently preferred embodiment of the method according to the

P&V F4458jA, 1984 11 26, HSN/IPb/KHkb

invention the first and second parts are arranged in a first layer and a second layer, respectively, arranged on top of each other.

Furthermore, the method according to the invention may be adapted so as to provide the first and second parts on a support layer, preferably by arranging the first layer on top of the support layer, and the second layer on top of the first layer.

The invention will now be further described with reference to the drawings, wherein

Fig. 1 is a perspective, sectional and partially broken away view of a presently preferred embodiment of a magnetic recording member according to the invention arranged on a supporting layer and together therewith defining a magnetic card,

Fig. 2 a perspective, schematical view of a reading and writing station which is adapted to read information from and write information in a magnetic recording member according to the invention constituting a magnetic strip of a magnetic card,

Fig. 3 a schematical view of a production plant for carrying out the method according to the invention and for producing the magnetic card shown in Fig. 1,

Fig. 4 a diagram illustrating pre-recorded information and the additional information of the magnetic recording member and further the output of a magnetic reading head, and

Figs. 5 and 6 perspective, sectional and partially broken away views of an alternative embodiment of the magnetic recording member according to the invention arranged on a supporting layer at an initial and at a final production step.

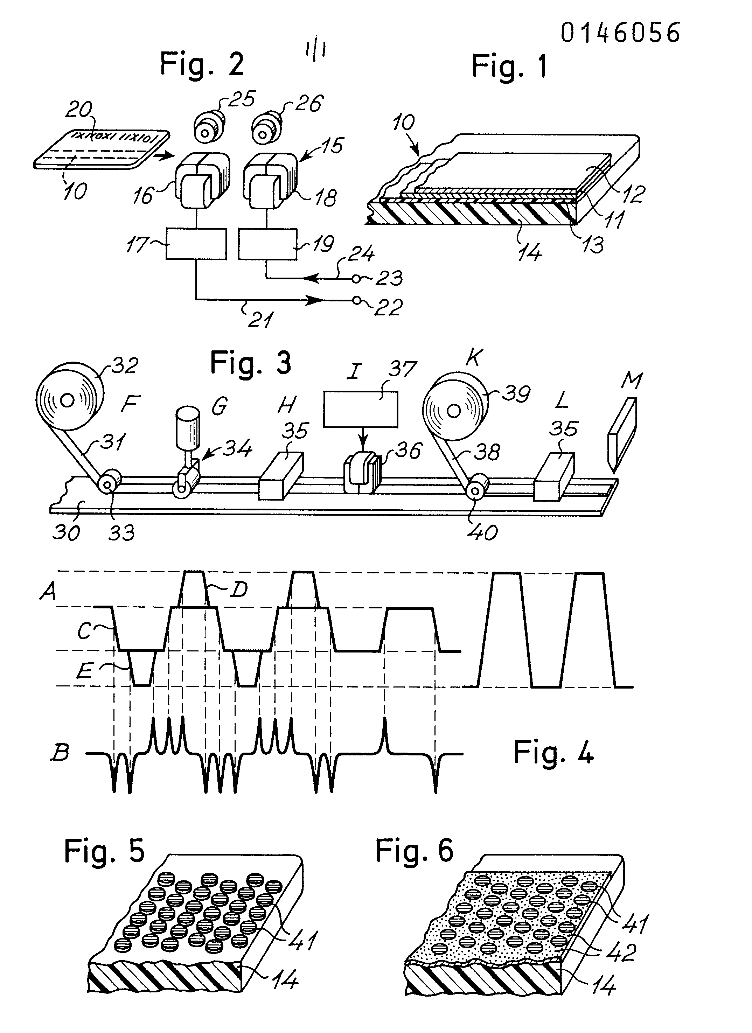

In Fig. 1, a presently preferred embodiment of a magnetic recording member 10 according to the invention is shown. The magnetic recording member 10 comprises a first magnetic layer 11 and a second magnetic layer 12 which is arranged on top of the first magnetic layer 11. The magnetic recording member 10 is glued to a support layer 14 by means of a glue layer 13. Each of the magnetic layers 11 and 12 includes a magnetic medium such as elongated magnetic particles, e.g. ferrous particles, particles including cromium or cobalt or any other

P&V F4458jA, 1984 11 26, HSN/lPb/KHkb

magnetic material or any combination of such materials. By providing the magnetic medium of the magnetic layers as elongated magnetic particles, a magnetically oriented material is provided. Although the elongated magnetic materials of the magnetic layers may be arranged in any orientation, it is, however, mandatory that the orientations of the particles of the layers 11 and 12 and consequently the magnetic orientations of the layers are identical to each other. The support layer 14 constitutes a magnetic card support of the type described in International Standard ISO 2894, such as a card measuring 85.72 mm (3.375 inch) x 54.03 mm (2.127 inch). Although the ISO recommends a thickness of the card of 0.76 ±0.08 mm (0.030 ±0.03 inch), the support layer 14 is, however, in accordance with the present invention preferably of a smaller thickness, such as a thickness of 0.2-0.4 mm. The magnetic layers 11 and 12 are preferably of a thickness of 10 µm. Although the magnetic materials of the first and second magnetic layers 11 and 12 may be different from each other, it is, however, of the utmost importance that the magnetic properties or magnetic characteristics of the materials are substantially identical to each other, particularly that the intrinsic coercivities of the two materials are substantially identical. In the presently preferred embodiment of the magnetic recording member according to the invention, the intrinsic coercivity of the magnetic materials of layers 11 and 12 is of the order of 300 Oe, and the remanence of the magnetic materials is of the order of 5 Maxwells (50 nWb).

In Fig. 2, a reading and writing station 15 is shown which is adapted to cooperate with the magnetic recording member 10 of a magnetic card 20, i.e. adapted to read information from the magnetic recording member 10 and to write information in the magnetic recording member 10 of the card 20. The station 15 comprises a reading head 16 which is connected to an electronic circuit block 17 and further through a signal lead 21 to an output terminal 22 which is further connected to external equipment such as a computer of a credit card organization, a bank or the like. The reading and writing station 15 further comprises a writing head 18 which is connected to an electronic circuit block 19 which receives electrical signals from an input terminal 23 through a signal lead 24 from the above computer. For moving the

P&V F4458jA, 1984 11 26, HSN/IPb/KHkb

magnetic recording member 10 of the card 20 in contact with the magnetic reading and writing heads 16 and 18, the station 15 is further provided with pulleys 25 and 26 constituted by drive pulleys or idler pulleys or a combination of a drive pulley and an idler pulley.

Now further referring to the diagram of Fig. 4, the operation of the reading and writing station 15 is to be described. In this application of the present invention, the magnetic strip constituted by the magnetic recording member 10 of the magnetic card 20 includes pre-recorded information. The pre-recorded information may indicate the maximum amount to be drawn from an account by a person in possession of the card 20. Basically, any other maximum limit transaction or payment may be carried out in accordance with these principles. Through a keyboard terminal or any other appropriate means, the customer informs the above computer of the amount he wishes to draw from his account. By means of the reading head 16 the computer further receives information as to the maximum limit of the customer's account and further as to the amounts previously drawn from the customer's account. Further information regarding the amount drawn from the account in the present transaction, is input to the station 15 through the input terminal 23 and recorded in the magnetic recording member 10 of the card 20 by means of the writing head 18. In Fig. 4, the upper part A illustrates the total flux of the magnetic recording member 10 and the lower part B illustrates the output from the reading head, e.g. the reading head 16 shown in Fig. 2. The flux shown in A is composed of the flux of the first magnetic layer 11 and the flux of the second magnetic layer 12. As will be explained below with reference to Fig. 3, the pre-recorded information is preferably recorded in the first magnetic layer 11. The pre-recorded information is illustrated by the alternating flux curve C which alters between the maximum positive remanence and the maximum negative remanence of the magnetic material of the layer 11. The individual periods of the alternating curve C represents individual digits which are "consumed" by the customer as money is drawn from the customer's account. The situation that a digit has been "consumed" by the customer is recorded as additional information in the magnetic recording member 10, i.e.

P&V F4458jA, 1984 11 26, HSN/IPb/KHkb

in the second magnetic layer 12 of the member 10. The curves D and E illustrate the positive and negative flux of the second magnetic layer 12 as the additional information is recorded in the second layer 12. The additional information regarding the "consumption" of the digits of the pre-recorded information is superimposed on the flux variation of the pre-recorded information as illustrated by the curves D and E. In the left-hand side of Fig. 4, the digits represented by the first and second period of the curve C are "consumed" whereas the digits represented by the third period of the curve C is not yet "consumed". The output of the reading head shown at B clearly illustrates that the consumption of the individual digits results in a plurality of peaks of a first polarity and a further plurality of peaks of an opposite polarity within each period representing the digit in question. A not yet "consumed" digit results in an output of two peaks exclusively, of opposite polarity within the period in question. It is to be realised that in case it is attempted to erase the additional information, i.e. to erase the information represented by the curves D and E, the pre-recorded information represented by the curve C is inevitably tampered with so that the output from the reading head, i.e. the curve shown at B in Fig. 4 inevitably exhibits a plurality of peaks within each period of the original cycle of the curve C.

From Fig. 4 it is evident that the fraud- and tamper-proof principle of the present invention is based on the two part or - in the embodiment shown in Fig. 1 - the two layer configuration of the magnetic recording member, as the recording of any additional information in the second part or the second layer leads to a re-recording of information in the first part or the first layer of the magnetic recording member. Thus, the recording of the information illustrated by the curves D and E of Fig. 4 also involves recording of this information in the first part or the first layer of the magnetic recording member, but due to the total saturation of the magnetic material of the first part or the first layer of the magnetic recording member, as illustrated by the curve C, the information recorded in the first part or first layer is not altered due to the recording of the additional information in the second part or second layer.

P&V F4458jA, 1984 11 26, HSN/IPb/KHkb

In case it is attempted to erase the information recorded in the second part or second layer inevitably involves exposure of the information recorded in the first part or first layer to a magnetic field of a direction opposite to the remanence of the information recorded in the first layer and is very easily detected from the signal supplied from the head due to the fact that only the "un-consumed" digits generate a single pair of opposed peaks in the output signal as illustrated by the third cycle of the signal B.

In case it is attempted to tamper with the information recorded in the magnetic recording member by reading the pre-recorded information from the member prior to the use of the card including the magnetic recording member, and by re-recording the original information in the magnetic recording member after the card has been used, i.e. after the digits have been "consumed", the magnetic recording member is brought into a state illustrated in the right-hand side of Fig. 4. As is evident from the curve, the first part or first layer as well as the second part or second layer of the magnetic recording member are magnetically saturated. Consequently, the reading and writing station very easily detects this state of the magnetic recording member as the recording of additional information in the second part of or the second layer of the member does not result in any change of the magnetic state of the member. Therefore, this tampering attempt is very easily revealed, and the cards comprising the false magnetic recording member is rejected in the station.

Fig. 3 shows a method of preparing the above presently preferred embodiment of the magnetic recording member arranged on a support layer. The support layer is conveyed as a continuous track from a supply, such as an extruder or the like. The support layer is designated 30 and supplied to a first station designated F of the production plant. In the station F, a first layer track 31 is supplied from a supply 32 and applied to the upper side surface of the support layer track 30 by means of a roller 33. The first layer track 31 may comprise a support foil, not shown on the drawing, and a glue layer may further be applied to the upper side surface of the support layer track 30 in a station prior to the station F.

P&V F4458jA, 1984 11 26, HSN/IPb/KHkb

0146056

In a second station G, the first layer track 31 is pressed into intimate contact with the support layer track, or, optionally, the glue layer supplied to the upper side surface of the support layer track 30, by means of a pressure roller assembly 34.

In a third station H, the upper side surface of the first layer track 31 is polished by means of a pressure polisher assembly 35.

In a fourth station I, information constituting pre-recorded information of the magnetic recording member is written into the first layer track 31 by means of a magnetic writing head 36, which is connected to an electronic circuit block 37 including generator, amplifier, and biassing means as is well known within the magnetic recording field.

In a fifth station K a second layer track 38 is supplied from a supply 39 and applied on top of the first layer track 31 by means of a roller 40. In a further station L the upper side surface of the second layer track 38 is polished by means of the pressure polisher assembly 35, and prior to the station L, a station basically identical to the station G may optionally be arranged.

Finally, the finished track assembly is cut into individual magnetic cards comprising a support layer and a magnetic recording member according to the invention in a station M.

In Figs. 5 and 6, an alternative embodiment of the magnetic recording member according to the invention is shown. Whereas the first and second parts of the magnetic recording member is constituted by a first and a second layer, respectively, in the embodiment shown in Fig. 1, the first part of the magnetic recording member is constituted by dots 41 of a first magnetic material which are arranged on the upper side surface of the supporting layer 14. The dots 41 are applied to the upper side surface of the support layer 14 in a first production step whereafter the pre-recorded information is written into the dots 41.

P&V F4458jA, 1984 11 26, HSN/IPb/KHkb

In a second production step, a continuous layer is applied on top of the dots 41 and constitutes a filling-out of the space between the dots 41. The continuous layer 42 constitutes the second part of the magnetic recording member and is adapted for recording additional information as explained above.

EXAMPLE

A total of twelve cards of the kind shown in Fig. 1 and basically of the above International Standard ISO 2894 type were manufactured by the British company Thorn EMI Electronics Limited, communications division, Penleigh Works, Wookey Hole Road, Wells, Somerset, England. The support layer of the card was a conventional polyvinyl chloride layer, and the total card face was coated with a first layer of a magnetic material of a thickness of 10 µm, and of a coercitive force of 300 Oe. On top of the first layer, a second layer of the same magnetic material was arranged, however, of a thickness of 15 µm. No protective overlaquer was provided. The first layer was orientated at 25 frpi (flux reversals per inch).

The cards were tested and the results obtained were in conformity with the results expected, i.e. the cards had the properties described above.

Although the invention has been described with reference to two specific embodiments and a specific production method, it is to be understood that numerous modifications are possible within the scope of the present invention as defined in the appending claims. Thus, the two layer concept of the present invention is very easily adapted to mediums other than the magnetic card, such as magnetic tapes, magnetic charts, magnetic discs, etc. Furthermore, the individual parts or layers, i.e. the first and second parts or the first and second layers of the magnetic recording member may be constituted by more than a single part or layer each, e.g. be composed of a plurality of parts or layers. Finally, the method of preparing the magnetic recording member according to the invention is very easily adapted or modified by the worker skilled in the art to the medium in question.

P&V F4458jA, 1984 11 26, HSN/IPb/KHkb

0146056

CLAIMS

1. A magnetic recording member comprising a first part of a first magnetic material and a second part of a second magnetic material, said first and second materials having substantially identical magnetic properties, said first part including pre-recorded information and said second part constituting a part for recording additional information, and said first and second parts being arranged in relation to each other so as to eliminate the possibility of recording information in said second part without re-recording information in said first part.

2. A magnetic recording member according to claim 1, the first part defining a dot pattern and the second part constituting a filling-out of said dot pattern.

3. A magnetic recording member according to claim 1, the first and second parts constituting a first layer and a second layer, respectively, arranged on top of each other.

4. A magnetic recording member according to any of the preceding claims, the first and second materials comprising substantially uniform, elongated magnetic particles, and the magnetic particles of said first and second parts defining substantially identical directions of magnetic orientation in said first and second parts.

5. A magnetic recording member according to any of the preceding claims, the first material being identical to the second material.

6. A magnetic recording member according to any of the preceding claims, the first and second materials having substantially identical intrinsic coercivity of the order of 100-10,000 Oe, preferably 100-1,000 Oe, more preferably 300 Oe.

7. A magnetic recording member according to any of the preceding claims, the first and second materials having substantially identical remanence of the order of 1-10 Maxwells (10-100 nWb), preferably approximately 5 Maxwells (50 nWb).

P&V F4458jA, 1984 11 26, HSN/IPb/KHkb

0146056

8. A magnetic recording member according to any of the preceding claims, the member being arranged on a support layer.

9. A magnetic recording member according to claims 3 and 8, said first layer being arranged on top of said support layer, and said second layer being arranged on top of said first layer.

10. A magnetic recording member according to claim 8 or 9, the support layer and the magnetic recording member together constituting a magnetic card, and the first and second layers together defining a magnetic strip extending across the support layer.

11. A method of preparing a magnetic recording member comprising a first part of a first magnetic material and a second part of a second magnetic material, said first and second materials having substantially identical magnetic properties, comprising the following steps:
a) providing said first part,
b) recording information in said first part, and
c) providing said second part arranged relative to said first part so as to eliminate the possibility of recording information in said second part without re-recording information in said first part.

12. A method according to claim 11, the first part being arranged in a dot pattern, and said second part being arranged as a filling-out of said dot pattern.

13. A method according to claim 11, said first and second parts being arranged in a first layer and a second layer, respectively, arranged on top of each other.

14. A method according to any of the claims 11-13, said first and second parts further being provided on a support layer.

15. A method according to claim 14, said first layer being arranged on top of said support layer, and said second layer being arranged on top of said first layer.

P&V F4458jA, 1984 11 26, HSN/IPb/KHkb

**Fig. 2**

**Fig. 1**

**Fig. 3**

**Fig. 4**

**Fig. 5**

**Fig. 6**